# EUROPEAN PATENT APPLICATION

(11) **EP 2 236 418 A2**
(43) Date of publication of application: **06.10.2010**
(21) Application number: 10153685.2
(22) Date of filing: 16.02.2010
(51) Int. Cl.: B64D 10/00, A62B 7/14

(54) **Method of adapting the functionality of aircraft breathing apparatus**

(30) Priority: 31.03.2009 GB 0905492
(71) Applicant: Honeywell UK Limited, Bracknell, Berkshire RG12 1EB (GB); Honeywell Aerospace BV, 1101 EA Amsterdam (NL)
(72) Inventor: Oborne, Terence, Yeovil Somerset BA21 4PG (GB); Tucker, Paul Ashton, Tatworth, Chard Somerset TA20 2SB (GB)
(74) Representative: Lucking, David John

(57) **Abstract**

A method of adapting the functionality of an aircraft breathing apparatus (10), the breathing apparatus (10) including an aircrew portion (14) and an aircraft portion (12), the aircrew portion (14) having a fluid inlet (18) which is connectable to a fluid outlet (16) of the aircraft portion (12), to enable fluid communication between the fluid outlet (16) of the aircraft portion (12) and the fluid inlet (18) of the aircrew portion (14),
the breathing apparatus (10) further including a valve (24), the normal operation of the valve (24) being such that a valve member (26) of the valve (24) is movable between a first condition and a second condition, such that in the first condition, whilst the aircrew portion (14) and the aircraft portion (12) are connected to one another, the valve member (26) is spaced from a valve seat (28) to permit the flow of fluid into the inlet (18) of the aircrew portion (14), and in the second condition, when the aircrew portion (14) and the aircraft portion (12) are disconnected, the valve member (26) is seated against the valve seat (28) to prevent the flow of fluid into the inlet (18) of the aircrew portion (14),
the method including providing a spacer (40) having a substantially annular body (42) and at least one projection (44) which extends from the body (42), at least a part of the spacer (40) being flexible, the spacer (40) being locatable so as to inhibit the movement of the valve member (26) from the first condition into the second condition when the aircrew portion (14) and the aircraft portion (12) are disconnected from one another, so as to permit the flow of at least some fluid from the fluid outlet (16) of the aircraft portion (12) into the inlet (18) of the aircrew portion (14) of the breathing apparatus (10).

## Description

This invention relates to a method of adapting the functionality of an aircraft breathing apparatus.

It is known to provide breathing apparatus for aircrew members, the apparatus having two portions, namely an aircraft portion which includes a supply of breathing gas which is carried in, and is generally connected to, a body of an aircraft, and an aircrew portion which includes a mask which is worn around the nose and mouth of the aircrew member. The aircraft portion and the aircrew portion are connected together during use such that fluid communication between a breathing gas outlet of the aircraft portion and an inlet of the aircrew portion is permitted, so as to enable the aircrew member to breathe the gas from the supply of breathing gas. Whilst the aircraft portion and aircrew portion of the breathing apparatus are connected together, the aircrew member is effectively attached to the aircraft body by the breathing apparatus. In the event of the aircrew member having to eject from the aircraft, the aircraft portion and the aircrew portion of the breathing apparatus are disconnected, usually automatically, to enable the aircrew member to be detached from the aircraft with the aircrew portion of the breathing apparatus.

Breathing apparatus of this type is required to be fitted with a valve, the normal operation of the valve being such that a valve member is moveable between a first condition and a second condition. In the first condition, whilst the aircrew portion and the aircraft portion are connected to one another, the valve member is spaced from a valve seat to permit breathing gas to pass from the aircraft portion into the aircrew portion, and in the second condition, when the aircrew portion and the aircraft portion are disconnected, the valve member moves towards the valve seat to close the inlet of the aircrew portion. The valve member normally functions such that the valve member automatically moves towards the second condition upon disconnection of the aircraft portion and the aircrew portion. This is to provide an anti-drown function following ejection from the aircraft and descent of the aircrew member into water. An ancillary breathing gas supply is provided to enable the ejected aircrew member to breathe, at least until the aircrew member has descended to a low enough altitude that the oxygen content of the ambient air is at a sufficient level for the ambient air to be breathable.

There is a desire, in some circumstances, not to provide such an anti-drown function at the connection between the aircrew portion and the aircraft portion of the breathing apparatus, and thus to enable fluid to enter the inlet of the aircrew portion of the breathing apparatus, even in situations where the aircrew portion and the aircraft portion of the breathing apparatus are disconnected. For example, the breathing apparatus may be supplied with masks of varying types for different applications, and some such masks may not require an anti-drown function to be provided at the connection between the aircrew portion and the aircraft portion, for example if the anti-drown function is provided elsewhere in the breathing apparatus. However, there is no option to remove the valve from the breathing apparatus. The removal of the valve would necessitate a major redesign of the equipment and complexion of a certification process, in order to ensure that the modified apparatus complied with aviation regulations, both of which would be costly and time consuming. Furthermore, in the event that it is desired to reinsert the valve, following its removal, this would necessitate still further assessment and certification. Therefore there is a need to be able to modify the functionality of the valve in certain circumstances, such that the inlet of the aircrew portion is not closed upon disconnection of the two portions of the breathing apparatus. It is also desirable to be able to reverse the modification of the functionality of the breathing apparatus.

According to a first aspect of the present invention, there is provided a method of adapting the functionality of an aircraft breathing apparatus, the breathing apparatus including an aircrew portion and an aircraft portion, the aircrew portion having a fluid inlet which is connectable to a fluid outlet of the aircraft portion, to enable fluid communication between the fluid outlet of the aircraft portion and the fluid inlet of the aircrew portion, the breathing apparatus further including a valve, the normal operation of the valve being such that a valve member of the valve is moveable between a first condition and a second condition, such that in the first condition, whilst the aircrew portion and the aircraft portion are connected to one another, the valve member is spaced from a valve seat to permit the flow of fluid into the inlet of the aircrew portion, and in the second condition, when the aircrew portion and the aircraft portion are disconnected, the valve member is seated against the valve seat to prevent the flow of fluid into the inlet of the aircrew portion, the method including providing a spacer having a substantially annular body and at least one projection which extends from the body, at least a part of the spacer being flexible, the method including locating the spacer so as to inhibit the movement of the valve member from the first condition into the second condition when the aircrew portion and the aircraft portion are disconnected from one another, so as to permit the flow of at least some fluid from the fluid outlet of the aircraft portion, into the inlet of the aircrew portion of the breathing apparatus.

The method may include flexing the spacer and inserting the spacer into the fluid inlet of the aircrew portion, so as to locate a part of the spacer between the valve member and the valve seat.

The substantially annular body of the spacer may be flexible.

An advantage of providing such a spacer having a flexible annular body and at least one projection is that the spacer can be fitted through the inlet of the aircrew portion of the breathing apparatus, and located for example, between the valve member and the valve seat, without having to dismantle the parts of the aircrew portion. The inlet of the aircrew portion of the breathing apparatus is generally narrower than the passage through which breathing gas flows to the mask of the apparatus, so as to provide the valve seat. Providing a spacer which has a flexible body enables the spacer to be temporarily deformed, to decrease its size, in at least one direction, to enable the insertion of the spacer into the inlet. Following insertion of the spacer into the inlet, the spacer is able to return elastically to its usual configuration so that the projection or projections are located for example between the valve member and the valve seat, to inhibit the valve member from seating against the valve seat. Once in place, the spacer inhibits the movement of the valve member from the first condition to the second condition, without completely blocking the inlet of the aircrew portion of the breathing apparatus, either whilst the aircrew portion and the aircraft portion are connected or when the two portions are disconnected. It is a simple task to apply the spacer to the breathing apparatus, with confidence that the functionality of the breathing apparatus has been adapted as required.

The valve member may be biased towards the second condition. The method is effective in situations where the valve member moves towards the valve seat automatically upon disconnection of the aircrew portion and the aircraft portion of the breathing apparatus, so as to provide an "anti-drown function".

The method may include providing a spacer wherein the at least one projection extends substantially radially from the body. The method may further include providing a spacer which has a plurality, e.g. three, regularly circumferentially spaced projections, In this case, locating the spacer between the valve member and the valve seat provides three regularly circumferentially spaced passages through which fluid is able to pass into the inlet of the aircrew portion. This means that the projections of the spacer contact parts of the valve seat or the valve member which are generally regularly spaced, so as to avoid tilting the valve member relative to the valve seat. Furthermore, the cross-sectional area of the projections may be small relative to the cross-sectional area of an annulus which effectively is formed between an external circumference of the annular body and a maximum circumference of the spacer which is defined by the points to which the projections extend. Therefore the flow of fluid into the inlet is not substantially affected by the presence of the spacer.

The method may include providing a spacer, the projection or projections of which are integrally formed with the annular body. This increases the integrity and strength of the spacer.

The method may include providing a visible indication, for example in the vicinity of the valve, that the functionality of the valve has been adapted in accordance with the preceding method steps. This ensures that it can immediately be seen that the "anti-drown" functionality of the breathing apparatus has been overridden and will not operate.

The adaptation may be readily reversed, by removing the spacer. Thus the functionality of the breathing apparatus is not necessarily permanently adapted. Therefore, if it is desirable to reinstate the normal functionality of the breathing apparatus, this is simple to effect by removing the spacer. The spacer is removed by separating the aircrew portion and the aircraft portion of the breathing apparatus if necessary, grasping a part of the spacer, and deforming at least a part of the spacer to enable the spacer to be withdrawn from the inlet of the aircrew portion.

The method may include providing a spacer, at least a part of which is manufactured from an elastomeric material. This enables the part of the spacer which is manufactured from the elastomeric material to be easily manually deformed, whilst retaining strength and integrity. The part of the spacer manufactured from an elastomeric material is able to return elastically to its original shape after deformation for insertion into or removal from the inlet of the breathing apparatus. Therefore the spacer is re-usable.

According to a second aspect of the invention, there is provided a method of adapting the functionality of an aircraft breathing apparatus, the breathing apparatus inducing an aircrew portion and an aircraft portion, the aircrew portion having a fluid inlet which is connectable to a fluid outlet of the aircraft portion, to enable fluid communication between the fluid outlet of the aircraft portion and the fluid inlet of the aircrew portion, the breathing apparatus further including a valve, the normal operation of the valve being such that a valve member of the valve is moveable between a first condition and a second condition, such that in the first condition, whilst the aircrew portion and the aircraft portion are connected to one another, the valve member is spaced from a valve seat to permit the flow of fluid into the inlet of the aircrew portion, and in the second condition, when the aircrew portion and the aircraft portion are disconnected, the valve member is seated against the valve seat to prevent the flow of fluid into the inlet of the aircrew portion, the valve member being biased towards the second condition, the method including providing a spacer having a substantially annular body and at least one projection which extends from the body, at least a part of the spacer being flexible, separating the aircrew portion from the aircraft portion, temporarily deforming the spacer, overcoming the bias of the valve member towards the second condition, inserting the spacer into the inlet of the aircrew portion, locating the spacer to inhibit the movement of the valve member to the second condition when the aircrew portion and the aircraft portion are disconnected from one another, and re-connecting the aircrew and aircraft portions of the breathing apparatus.

According to a third aspect of the invention, there is provided an aircraft breathing apparatus, the functionality of which has been adapted in accordance with the first or second aspect of the invention.

According to a fourth aspect of the invention, there is provided an aircraft including an aircraft breathing apparatus according to the third aspect of the invention.

An embodiment of the invention will now be described, by way of example only, with reference to the accompanying drawings, of which:
FIGURE 1 shows an aircraft having a breathing apparatus,
FIGURE 2 shows an exemplary connection between an aircraft portion and an aircrew portion of an aircraft breathing apparatus;
FIGURE 3 shows a spacer for use in adapting the functionality of the aircraft breathing apparatus; and
FIGURE 4 shows the spacer of Figure 3 applied to an aircraft breathing apparatus, such that the functionality of the breathing apparatus of Figure 4 is adapted.
FIGURE 5 is a view similar to Figure 3 but of a further embodiment of spacer;
FIGURE 6 is a view of part of a valve, similar to Figure 4, but using the modified spacer of Figure 5.

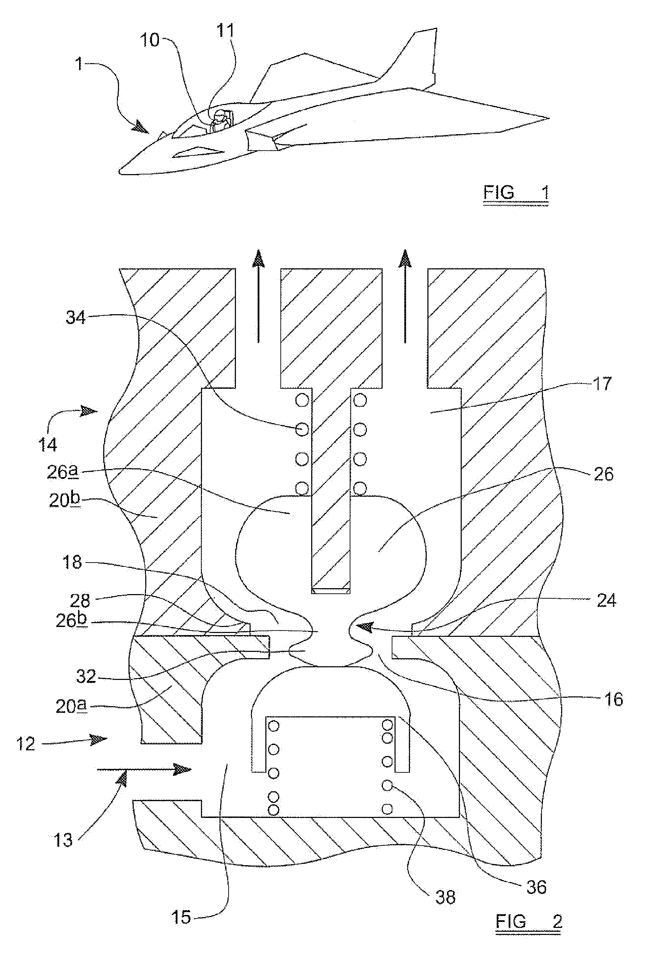

Referring to Figure 1, there is shown an aircraft 1, which includes a breathing apparatus 10. Figure 2 shows a connection between an aircraft portion 12 and an aircrew portion 14 of the aircraft breathing apparatus 10.

The aircraft portion 12 of the breathing apparatus 10 includes a supply of breathing gas, i.e. pure oxygen or oxygen-enriched air. The aircraft portion 12 is carried by an aircraft body and is connected to the aircraft body. The aircraft portion 12 includes a passage 15 through which fluid, i.e. breathing gas, is permitted to flow from the supply of breathing gas to an outlet 16. The flow of breathing gas through the aircraft portion 12 of the breathing apparatus 10 is shown generally at 13.

The aircrew portion 14 includes a mask 11 which is worn around the nose and mouth of an aircrew member. The aircrew portion 14 also includes a passage 17, through which, in normal operation of the breathing apparatus 10, breathing gas, is permitted to pass from an inlet 18 to the mask of the aircrew portion 14. The passage 17 includes a tube which extends between the inlet 18 of the aircrew portion 14 and the mask. The inlet 18 is narrower than the passage 17 so as to form a shoulder as will be described in more detail below.

Each of the aircraft portion 12 and the aircrew portion 14 includes a connecting part 20a, 20b respectively, for connecting the aircrew portion 14 to the aircraft portion 12 so as to enable fluid communication therebetween. Whilst the two connecting parts 20a, 20b are connected to one another, the aircrew member is attached to the aircraft 1 by the breathing apparatus 10.

The two connecting parts 20a, 20b are separable such that, in the event of the aircrew member ejecting from the aircraft 1, the two parts 20a, 20b disconnect from one another, to break the connection between the aircraft portion 12 and the aircrew portion 14 of the breathing apparatus 10 and hence between the aircrew member and the aircraft 1.

The second connecting part 20b associated with the aircrew portion 14 of the breathing apparatus 10 includes a valve 24, which in this example is a poppet valve. The valve 24 includes a valve member 26 which, in this example, is generally part-spherical, and has a first, upper end 26a and a second, lower end 26b. It will be appreciated that other shapes of valve member 26 are possible, e.g. substantially spherical, cone-shaped etc.

At least a part of the valve member 26 is wider than the inlet 18, so that the valve member is able to seat against the shoulder which is formed by the passage 17 and the inlet 18. Hence the shoulder forms a valve seat 28. The valve member 26 also includes an operating member 32, which is a protrusion which extends from the second end 26b of the valve member 26 towards the inlet 18. The operating member 32 is narrower than the inlet 18 and is able to extend at least partially therethrough.

The normal operation of the valve 24 is such that the valve member 26 is moveable between a first condition and a second condition. In the first condition, the valve member 26 is spaced from the valve seat 28, so as to permit the flow of fluid i.e. breathing gas 13, into the inlet 18 and along the passage 17 of the aircrew portion 14. In the second condition the valve member 26 is seated against the valve seat 28 to prevent the flow of fluid into the inlet 18 of the aircrew portion 14.

The breathing apparatus 10 includes a mechanism for controlling the movement of the valve member 26 between the first and second conditions. The valve member 26 is resiliently biased towards the second condition by a first compression spring 34 which is positioned towards the first end 26a of the valve member 26. The first connecting part 20a of the aircraft portion 12 includes a closure member 36 which is able to seat against the outlet 16 of the aircraft portion 12. The closure member 36 is resiliently biased towards the outlet 18 by a second compression spring 38. The closure member 36 ensures that in circumstances where the aircrew portion 14 and the aircraft portion 12 are disconnected from one another, which may be necessary for maintenance of the breathing apparatus for example, debris is inhibited from entering the aircraft portion 12 via the outlet 16.

In normal operation, when the aircraft portion 12 and the aircrew portion 14 are connected together, the closure member 36 and the operating member 32 of the valve member 26 act against one another. The spring constant of the second compression spring 38 is greater than the spring constant of the first spring 34, therefore the force applied by the second spring 38 is greater than that which biases the valve member 26 towards the second, closed condition. Thus, whilst the aircraft portion 12 and the aircrew portion 14 are connected to one another, the valve member 26 is urged towards the first condition, such that breathing gas is permitted to pass from the outlet 16 of the aircraft portion into the inlet 18 and through the passage 17 of the aircrew portion 14.

Upon disconnection of the aircraft portion 12 and the aircrew portion 14, for example upon ejection of the aircrew member from the aircraft, in normal operation of the breathing apparatus 10, the closure member 36 ceases to act upon the operating member 32 of the aircrew portion valve 24, and the valve member 26 is able to move towards the second condition, to seal the inlet 18 of the aircrew portion 14.

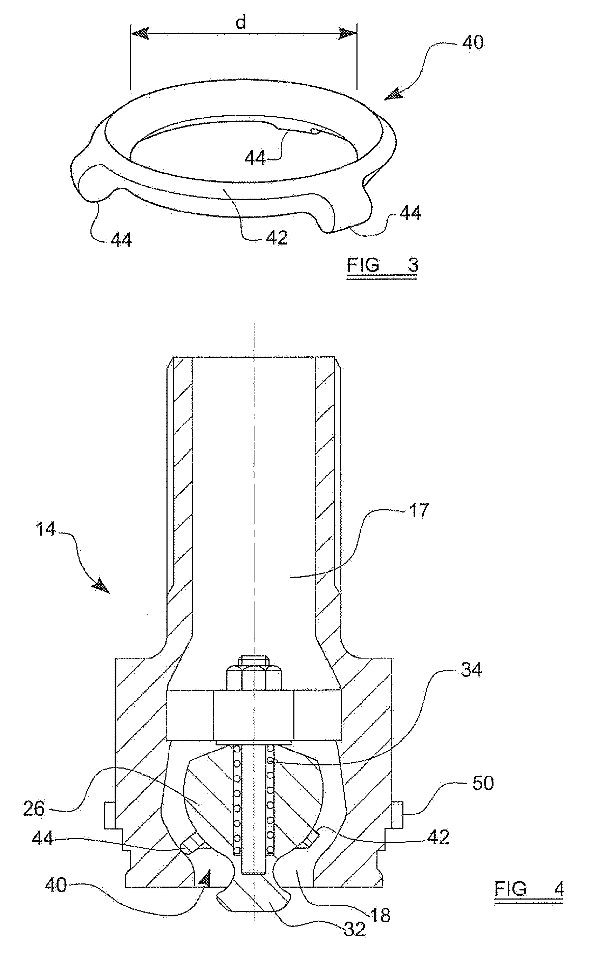

Referring now to figures 3 and 4, there is shown a spacer 40 for modifying the operation of the breathing apparatus 10. The spacer 40 includes a flexible substantially annular body 42, and has a plurality, in this example three, projections 44. It will be appreciated that any number of projections 44 may be provided, but it may be preferable to provide at least three projections 44 which are regularly circumferentially spaced around the body 42 to maintain the valve member 26 approximately central relative to the valve seat 28 when the spacer 40 is located therebetween. In this example, the substantially annular body 42 is circular in cross-section and each of the projections 44 is part-cylindrical, with the cylinder axis entering generally perpendicular to a radius.

Each projection 44 extends substantially radially outwardly from the annular body 42.

The internal diameter 'd' of the substantially annular body 42 is smaller than the maximum external dimension of the valve member 26, in order that the valve member 26 does not pass completely through the annular body 42, to ensure that when in place, the spacer 40 is positioned between the valve member 26 and the valve seat 28. The maximum external diameter of the spacer 40, which in the present example is defined by the radial extent of the outwardly extending projections 44, is larger than the inlet 18, so as to maintain the spacer 40 inside the passage 17 of the aircrew portion 14. The spacer 40 is manufactured from a resiliently deformable material, in this example by moulding an elastomeric material, for example silicon rubber.

In this embodiment, the body 42 and the projections 44 are integrally formed, and thus both the annular body and the projections 44 are flexible.

In order to adapt the functionality of the breathing apparatus, the spacer 40 is inserted into the aircrew portion 14 of the breathing apparatus 10, such that it is located between the valve member 26 and the valve seat 28. In order to perform this procedure, the aircrew portion 14 and the aircraft portion 12 of the breathing apparatus 10 must be separated. Therefore the procedure is intended to be carried out on the ground.

As a result of the aircrew portion 14 and the aircraft portion 12 being disconnected from one another, the valve member 26 will be in the second condition. Therefore, in order to insert the spacer 40 through the inlet 18, it is necessary to overcome the force exerted by the first compression spring 34, so as to unseat the valve member 26 from the valve seat 28. This can be done by applying a force manually to the operating member 32 of the valve member 26, so as to push the valve member 26 inwardly of the passage 17.

Since the spacer 40 is of larger external diameter than the inlet 18, it is necessary to deform temporarily at least a part of the spacer 40, to reduce the size of the spacer 40 in at least one direction, to enable the spacer 40 to be inserted into the aircrew portion 14 via the inlet 18. At least the annular body 42 can be manually deformed to achieve this reduction in size. Once the spacer 40 is located inside the aircrew portion 14, the spacer 40 is able to return elastically to its original shape and dimensions.

When the aircraft portion 12 and the aircrew portion 14 are re-connected, the valve 24 is in the first condition, and the valve member 26 and the spacer 40 are spaced from the valve seat 28 by the action of the valve member 26 and the closure member 36 against one another. Thus, even with the spacer 40 fitted, the breathing apparatus 10 functions normally whilst the aircraft portion 12 and the aircrew portion 14 are connected to one another.

When the aircraft portion 12 and the aircrew portion 14 are disconnected, for example in the event of the aircrew member needing to eject from the aircraft, the valve member 26 and the closure member 36 cease to act against one another and the spring 34 continues to urge the valve member 26 towards the valve seat 28. However, the spacer 40 inhibits the movement of the valve member 26 towards the second condition such as to prevent the valve member 26 from sealing against the valve seat 28. Thus at least some fluid is permitted to pass between the projections 44 of the spacer 40, and into the passage 17 of the aircrew portion 14. Thus the functionality of the breathing apparatus 10 is adapted by the fitting of the spacer 40 between the valve member 26 and the valve seat 28 without removing the valve 24, and without having to dismantle the aircrew portion 14 of the breathing apparatus 10.

Since the spacer 40 has three regularly spaced projections 44, the spaces between the projections 44 provide three regularly spaced passages through which fluid is permitted to pass when the aircrew portion 14 and the aircraft portion 12 are disconnected from one another.

It is possible to indicate that the functionality of the breathing apparatus 10 has been adapted, such that fluid is permitted to pass into the inlet 18 when the aircrew portion 14 and the aircraft portion 12 have been separated. Preferably a visual indication is provided, in the vicinity of the valve 24. in this example, a deformable annulus 50, which may be similar to the spacer 40, but which has no projections, is attached to an outer surface of the aircrew portion 14. The annulus 50 is dimensioned so as to be able to grip the outer surface of the aircrew portion 14. The annulus 50 may be brightly coloured, for example in order immediately to attract attention to the fact that the functionality of the breathing apparatus has been adapted. The valve 24 may otherwise be marked to indicate that a spacer 40 is fitted.

The spacer 40 is removable so as to return the breathing apparatus 10 to its normal functionality. To do so, the aircraft portion 12 and the aircrew portion 14 are disconnected from one another. Therefore, removal of the spacer 40 is also a procedure which is carried out on the ground. The spacer 40 can be grasped through the inlet 18, and at least a part of the body 42 of the spacer 40 deformed to enable the spacer 40 to be withdrawn from the aircrew portion 14 via the inlet 18. Once the spacer 40 has been removed, the valve member 26 is able to move to the second condition from the first condition when the aircraft portion 12 and the aircrew portion 14 of the breathing apparatus 10 are disconnected from one another. Thus the breathing apparatus 10 is immediately restored to its original functionality, without the aircrew portion 14 having to be dismantled, and can be re-used in its original condition, having normal functionality. The annulus 50 (or other marking) should also be removed from the aircrew portion 14 at the time the spacer 40 is removed.

The spacer 40 and the annulus 50 are re-usable as they are not permanently deformed by application to or removal from the breathing apparatus 10.

It will be appreciated that the valve member 26 does not necessarily have to be substantially spherical. The valve member 26 simply has to have a width dimension which is larger than the inlet 18 of the aircrew portion 14, so as to close the inlet 18 in normal use of the breathing apparatus 10. The body 42 of the spacer 40 need not be circular in cross-section, and may be any shape to suit the arrangement of the valve member 26 and the valve seat 28 of the aircrew portion 14.

It will be appreciated that other configurations of spacer 40 with a plurality of projections 44 are possible. For example, the projections 44 may extend substantially radially inwardly of the annular body, such that the projections 44 contact the valve member 26, and the annular body 42 contacts at least a part of the valve seat 28. The spacer 40 could alternatively have projections 44 which extend substantially radially inwardly and projections 44 which project substantially radially outwardly of the body 42. The projections 44 need not be semi-circular. The spacer 40 may include an inner substantially annular body, and a substantially annular outer body between which a plurality of projections extend.

Whilst the annular body 42 and the projections 44 are preferably integrally formed, it will be appreciated that the projections 44 may be joined in a manufacturing step. For example it may be desirable for the projections 44 to be substantially rigid whilst the annular body 42 is flexible, or vice versa.

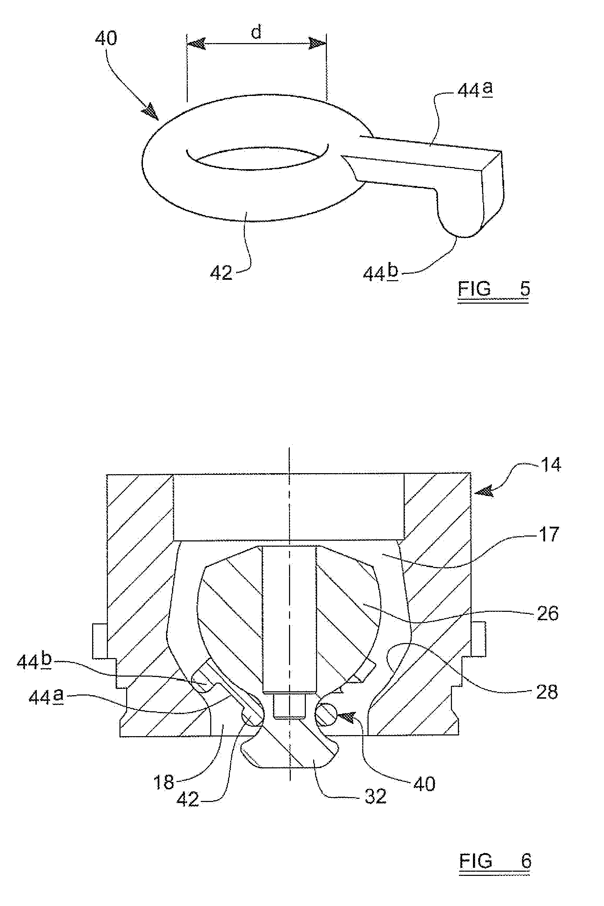

Referring now to figures 5 and 6, a further embodiment will be described. Similar parts to those identified with reference to the previous figures are indicated by the same references.

In figure 5, a further spacer 40 is shown which has a flexible substantially annular body 42, and single radially outwardly extending projection 44, which includes a radially extending limb 44a and a head 44b at the outermost end of the limb 44a. The internal diameter d of the annular body is smaller than the comparable dimension of the annular body of the embodiment in the previous figures.

As can be seen in figure 6, the annular spacer 40 is, in use, located about a narrow neck N between the operating member 32 of the aircrew portion valve 24, and the valve member 26, but the projection 44 extends so that the head 44b of the projection 44 is located between the valve member 26 and the valve seat 28. Thus in the event of the aircraft portion 12 and the aircrew portion 14 of the valve being disconnected e.g. in the event of pilot ejection, the spacer 40, and more particularly the head 44b, will prevent the valve member 26 closing with the valve seat 28.

To insert and remove the spacer in the figures 5 and 6 embodiment, substantially the same methods are performed as are described with reference to figures 2 to 4.

As is illustrated by the figures 5 and 6 embodiment, it is not essential for the entire spacer 40 to be located between the valve member 26 and valve seat 28, but at least a part of the spacer 40 e.g. a head 44b or other projection 44 part, will need to occupy this position.

In the figures 5 and 6 embodiment, although in the example only one projection 44 is described, the spacer could again have a plurality of projections 44.

The head 44b shown in figure 5 is of part-cylindrical configuration with the cylinder axis extending perpendicularly to the limb 44a. In another example, an alternative head 44b configuration may apply, with the head 44b extending axially of the annular spacer body 42 to either one or both sides of the limb 44a. The limb 44a configuration may be otherwise than as shown also.

Although in figure 5 the annual body 42 is shown ring-shaped i.e. of generally constant circular cross-section, in another example, the annular body 24 may of another cross-sectional shape.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of adapting the functionality of an aircraft breathing apparatus (10), the breathing apparatus (10) including an aircrew portion (14) and an aircraft portion (12), the aircrew portion (14) having a fluid inlet (18) which is connectable to a fluid outlet (16) of the aircraft portion (12), to enable fluid communication between the fluid outlet (16) of the aircraft portion (12) and the fluid inlet (18) of the aircrew portion (14),
the breathing apparatus (10) further including a valve (24), the normal operation of the valve (24) being such that a valve member (26) of the valve (24) is moveable between a first condition and a second condition, such that in the first condition, whilst the aircrew portion (14) and the aircraft portion (12) are connected to one another, the valve member (26) is spaced from a valve seat (28) to permit the flow of fluid into the inlet (18) of the aircrew portion (14), and in the second condition, when the aircrew portion (14) and the aircraft portion (12) are disconnected, the valve member (26) is seated against the valve seat (28) to prevent the flow of fluid into the inlet (18) of the aircrew portion (14),
the method including providing a spacer (40) having a substantially annular body (42) and at least one projection (44) which extends from the body (42), at least a part of the spacer (40) being flexible, the spacer (40) being locatable so as to inhibit the movement of the valve member (26) from the first condition into the second condition when the aircrew portion (14) and the aircraft portion (12) are disconnected from one another, so as to permit the flow of at least some fluid from the fluid outlet (16) of the aircraft portion (12) into the inlet (18) of the aircrew portion (14) of the breathing apparatus (10).

2. A method according to claim 1 **characterised in that** the method includes deforming the spacer (40) and inserting the spacer (40) into the fluid inlet (18) of the aircrew portion (14), so as to locate a part of the spacer (40) between the valve member (26) and the valve seat (28).

3. A method according to claim 1 or claim 2 **characterised in that** the method includes providing a spacer (40) which has a flexible substantially annular body (42).

4. A method according to any of the preceding claims **characterised in that** the method includes biasing the valve member (26) towards the second condition.

5. A method according to any of the preceding claims **characterised in that** the method includes providing a spacer wherein the at least one projection extends substantially radially from the body (42).

6. A method according to any of the preceding claims **characterised in that** the method includes providing a spacer (40) having three regularly circumferentially spaced projections (44).

7. A method according to any of the preceding claims **characterised in that** the method includes providing a spacer (40), the projection or projections of which are integrally formed with the annular body (42).

8. A method according to any of the preceding claims **characterised in that** the method includes providing a visible indication (50) that the functionality of the valve (24) has been adapted.

9. A method according to any of the preceding claims **characterised in that** the adaptation is reversible, by removing the spacer (40).

10. A method according to any of the preceding claims **characterised in that** the method includes providing a spacer (40) at least a part of which is manufactured from an elastomeric material.

11. A method of adapting the functionality of an aircraft breathing apparatus (10), the breathing apparatus (10) inducing an aircrew portion (14) and an aircraft portion (12), the aircrew portion (14) having a fluid inlet (18) which is connectable to a fluid outlet (16) of the aircraft portion (12), to enable fluid communication between the fluid outlet (18) of the aircraft portion (12) and the fluid inlet (16) of the aircrew portion (14),
the breathing apparatus (10) further including a valve (24), the normal operation of the valve (24) being such that a valve member (26) of the valve (24) is moveable between a first condition and a second condition, such that in the first condition, whilst the aircrew portion (14) and the aircraft portion (12) are connected to one another, the valve member (26) is spaced from a valve seat (28) to permit the flow of fluid into the inlet (18) of the aircrew portion (14), and in the second condition, when the aircrew portion (14) and the aircraft portion (12) are disconnected, the valve member (26) is seated against the valve seat (28) to prevent the flow of fluid into the inlet (18) of the aircrew portion (14), the valve member (26) being biased towards the second condition,
the method including providing a spacer (40) having a substantially annular body (42) at least one projection (44) which extends from the body (42), at least a part of the spacer (40) being flexible,
separating the aircrew portion (14) from the aircraft portion (12),
temporarily deforming the spacer (40),
overcoming the bias of the valve member (26) towards the second condition, inserting the spacer (40) into the inlet (18) of the aircrew portion (14),
locating the spacer (40) thus to inhibit the movement of the valve member (26) to the second condition when the aircrew portion (14) and the aircraft portion (12) are disconnected from one another, and
re-connecting the aircrew (14) and aircraft portions (12) of the breathing apparatus (10).

12. An aircraft breathing apparatus (10), the functionality of which has been adapted in accordance with the method of any of the preceding claim.
